Europäisches Patentamt

European Patent Office

Office européen des brevets

(19)

(11) Numéro de publication : **0 347 296 B1**

(12)

# FASCICULE DE BREVET EUROPEEN

(45) Date de publication du fascicule du brevet :
**30.09.92 Bulletin 92/40**

(51) Int. Cl.$^5$ : **C02F 3/12,** C02F 3/06,
B01J 8/22

(21) Numéro de dépôt : **89401621.1**

(22) Date de dépôt : **12.06.89**

(54) **Procédé et dispositif d'épuration d'eaux résiduaires sur filtre biologique à particules moins denses que l'eau.**

(30) Priorité : **16.06.88 FR 8808061**

(43) Date de publication de la demande :
**20.12.89 Bulletin 89/51**

(45) Mention de la délivrance du brevet :
**30.09.92 Bulletin 92/40**

(84) Etats contractants désignés :
**AT BE CH DE ES FR GB GR IT LI NL SE**

(56) Documents cités :
**US-A- 1 939 924
US-A- 4 322 296
PATENT ABSTRACTS OF JAPAN, vol. 12, no.
165 (C-496)[3012], 18 May 1988.
PATENT ABSTRACTS OF JAPAN, vol. 10, no.
56 (C-331)[2113], 6 March 1986.**

(73) Titulaire : **OTV (OMNIUM de TRAITEMENTS et
de VALORISATION)
Le Doublon 11 avenue Dubonnet
F-92407 Courbevoie (FR)**

(72) Inventeur : **Rogalla, Frank
31 Avenue Guillemin
F-92600 Asnières (FR)**

(74) Mandataire : **Cuer, André
CABINET CUER 30, rue de Léningrad
F-75008 Paris (FR)**

## Description

La présente invention a trait au domaine de l'épuration par voie biologique, des eaux résiduaires telles que notamment les eaux urbaines, les eaux industrielles ainsi que des eaux de distribution à rendre potables. Elle concerne tout spécialement un procédé de purification dans lequel l'eau à traiter et le gaz oxygéné sont envoyés à co-courants ascendants dans un seul réacteur ou filtre biologique muni, comme matériau de filtration, de matières plastiques ou minérales expansées de densité inférieure à celle de l'eau.

On sait que le traitement biologique, par exemple de l'eau, consiste à dégrader les impuretés organiques par l'action d'une biomasse épuratrice libre ou fixée, et renfermant des micro-organismes divers : bactéries, levures, protozoaires, métazoaires... Dans le procédé à biomasse libre, par boues activées, il y a impossibilité de concentrer en grand nombre les diverses espèces de micro-organismes, peu décantables dans la mesure où la concentration de la biomasse est réalisée par décantation ; le procédé est donc limité pour ce qui est de la charge applicable en DBO (demande biologique en oxygène) et DCO (demande chimique en oxygène). Dans un système à biomasse fixée, la concentration de la biomasse (avec les bactéries) se fait par l'accrochage sur un support. L'aptitude à la décantataion n'est plus alors le critère primordial et cette technique possède un potentiel épuratoire bien supérieur à celui des procédés conventionnels.

Parmi les procédés les plus performants, basés sur le principe d'épuration à biomasse fixée, on peut citer notamment ceux brevetés et developpés par la Demanderesse dont le procédé dit "Biocarbone" (marque déposée) et la technique consistant à mettre en oeuvre, dans un seul réacteur à courant d'eau ascendant, un lit granulaire constitué par deux zones de granulométrie et caractéristiques biologiques différentes (brevet français N°78.30282 publié N°2 439 749; N°86.13675 publié N° 2 604 990).

Dans les techniques dites à biomasse libre, on se reportera ici en particulier aux procédés, le plus souvent à lits fluidisés, dans lesquels on met en oeuvre, comme matériau pour le biofiltre, des produits de densité inférieure à 1 comme par exemple des polymères expansés, selon des processus qui sont maintenant dans le domaine public (brevet français N° 1 363 510 de 1963 ; brevet anglais N°1 034 076 de 1962) dont diverses variantes d'exécution ont donné lieu à de nombreux brevets d'invention (brevets français N°2 330 652 ; N° 2 406 664; N° 2 538 800 ; brevet américain N° 4 256 573 ; brevet japonais N° 58-153 590 ; etc).

La mise en oeuvre de ces matériaux flottants et de lits granulaires fluidisés est intéressante en soi mais entraîne un certain nombre de difficultés et présente souvent des inconvénients, dont plusieurs ont été mis en lumière par de longs essais effectués par la Demanderesse. Par exemple, si dans un biofiltre à courant ascendant d'eau sur billes ou granules moins denses que l'eau, on injecte l'air à la base du lit filtrant, les durées des cycles de filtration ne sont pas acceptables et la couche de surface se colmate rapidement par des matières en suspension qui bloquent le passage des bulles d'air ; des lavages très fréquents sont alors nécessaires. Lorsque, par ailleurs, on fluidise des matériaux plus lourds que l'eau (sable ou analogue), comme par exemple dans le brevet US-A- 4 322 296 il faut un apport d'énergie considérable pour le pompage du liquide et le maintien du matériau à l'intérieur du réacteur est difficile à maîtriser. Pour pallier cet inconvénient de consommation d'énergie, on a proposé d'utiliser un lit fluidisé à matériaux légers avec insufflation d'air à la base du lit mais avec une alimentation en eau descendante (brevets US N° 4 256 573 et japonais N° 58.153590 déjà cités). Toutefois, à partir d'une certaine vitesse descendante de l'eau, les bulles d'air sont piégées à l'intérieur du matériau ou alors entraînées par le flux liquide et l'on ne peut aérer correctement le réacteur.

Dans le but d'obvier aux inconvénients susvisés, de nombreuses expérimentations ont été faites chez la Demanderesse pour utiliser tous les avantages d'un lit flottant ou fluidisé en cherchant à éliminer les phénomènes de piégeage de bulles à la surface, colmatage du lit, dépenses en énergie, difficultés de lavage du lit filtrant, etc.

Ces difficultés ont été vaincues grâce à la découverte puis la mise au point d'un système où, dans le réacteur ou filtre biologique unique à co-courants ascendants d'eau et gaz oxygéné, on utilise comme moyen de filtration et support bactérien, selon deux zones contiguës : une couche inférieure d'un lit fluidisé de particules moins denses que l'eau puis une couche supérieure d'un lit fixe de particules également de densité inférieure à 1 mais plus petites et plus légères. En pratique, selon une disposition avantageuse, on recherche à satisfaire globalement à la relation:

$$\frac{D1}{D2} = \frac{S2 - SL}{S1 - SL} \ (1)$$

D1,S1 correspondant respectivement au diamètre moyen des particules et à la masse volumique du lit inférieur. D2,S2 : mêmes définitions que ci-dessus mais pour le lit supérieur, SL étant la masse volumique du liquide.

Le procédé selon l'invention met donc en oeuvre, pour la combinaison des deux lits superposés précités, des matériaux plus légers que l'eau mais dont les caractéristiques de granulométries, densités, hauteurs de lits (telles que précisées plus loin dans la description) sont différentes pour obtenir d'une part une fluidisation du lit inférieur lors de l'injection du gaz oxygéné sans perturbation notable du lit supérieur et, d'autre part, un reclassement "automatique" des deux couches ou lits lors de la phase d'expansion des matériaux légers pendant le lavage à contre-courant. Ces fonctions sont sensiblement remplies lorsque la relation (1) précitée est satisfaite. Au repos, les deux couches de matériaux plus légers que l'eau se collent l'une sur l'autre par leur différence de densité. Cette claissification est maintenue pendant le lavage du filtre à contre-courant. Lorsque l'air est introduit à la base du filtre, par un dispositif de diffusion, le mélange d'air et d'eau qui traverse les matériaux à une densité similaire à celle des particules de la couche inférieure précitée : ce lit inférieur est alors fluidisé par le mouvement ascendant des bulles de gaz oxygéné, ce qui procure un échange intensif entre le gaz, l'eau à traiter et le "biofilm" qui s'accroche aux particules du lit.

Selon une disposition avantageuse de l'invention, la surface supérieure du lit fixe supérieur, tel que défini ci-dessus est surmontée d'une couche-support de particules, également en matériau léger, dont les caractéristiques seront définies ci-après.

En pratique, les paramètres et caractéristiques des différentes couches des lits peuvent être définis avantageusement comme suit : pour le lit fluidisé inférieur, la granulométrie (D1) peut varier de 3 à 15 mm, la masse volumique est généralement comprise entre 300 et 800 g/l et la hauteur du lit s'étage entre 0,2 et 2 mètres selon le type de réacteur utilisé ; dans le lit fixe supérieur, le diamètre moyen des particules légères (D2) est de 1 à 10 mm, alors que la masse volumique (S2) varie de 20 à 100g/l et la hauteur peut varier de 0,5 à 3 mètres. Enfin dans le cas de la variante précitée, la couche supérieure qui surmonte le lit supérieur comprend des particules de taille 3 à 20 mm, une masse volumique de 10 à 50 g/l et une hauteur ou épaisseur comprise entre 0,10 et 0,50 mètre.

Les particules de matériaux légers utilisables comme milieu de filtration/support bactérien et visées dans le cadre de l'invention sont des produits connus en soi. On peut mettre en oeuvre à cet effet : des matières plastiques expansées, à cellules fermées issues de polyoléfines, polystyrène, polymères et copolymères caoutchouteux synthétiques, etc ; des matières minérales légères des types : argiles, shistes expansés; ou encore des produits cellulosiques tels que, par exemple, des particules de bois. Les granulats de ces matériaux peuvent se présenter sous diverses formes telles que, avantageusement : billes, lentilles cylindriques ou autres. En pratique, pour une bonne réalisation du procédé, il importe que les densités des particules légères utilisées dans le cadre de l'invention soient de plus en plus faibles lorsqu'on passe de la couche inférieure (lit fluidisé) au lit supérieur puis à la couche-support précitée. Par exemple les fourchettes de densités peuvent être respectivement de : 0,5 à 0,8 (lit fluidisé) de 0,03 à 0,1 (lit fixe) et 0,005 à 0,08 (couche-support supérieure).

D'autres caractéristiques, encore, du procédé seront mises en lumière dans la suite de la présente description.

L'invention a également pour objet un réacteur ou filtre biologique comprenant de bas en haut : une zone d'épaississement et d'évacuation des boues d'épuration ; un dispositif d'injection d'air ; une zone de matériau filtrant constituée par une première couche de particules légères (lit fluidisé) puis une seconde couche de particules légères moins dense (lit fixe), laquelle est surmontée d'une couche-support de particules encore plus légères; un plafond en béton ou autre matériau perforé ; et enfin, dans le haut du réacteur, une zone de réserve d'eau de lavage au sommet de laquelle est prévue l'évacuation de l'effluent traité.

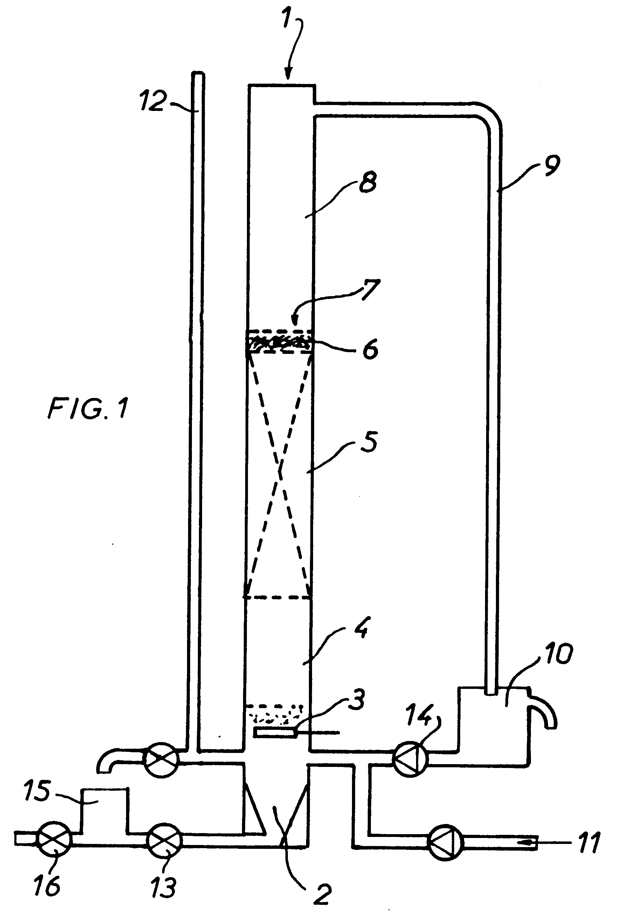

Une réalisation non limitative d'une installation de traitement d'eau est illustrée sur le schéma de principe de la figure N°1 annexée ici.

Le réacteur 1 comporte donc, dans sa partie inférieure, l'espace 2 pour l'épaississement et l'évacuation des boues; puis le système d'injection de fluide oxygéné 3, le lit 4 qui fonctionnera en fluidisation, la partie 5 du lit fixe puis la couche-support supérieure 6 retenue par la plaque perforée 7 servant de plafond; et enfin la zone supérieure libre 8 servant de réserve de lavage où l'eau traitée est évacuée par la canalisation 9 puis récupérée en 10.

Le liquide à traiter arrive par la canalisation 11 et est introduit dans la zone 2, en-dessous du dispositif d'injection de gaz oxygéné 3, ce dernier pouvant se trouver sous le lit 4, comme indiqué sur la figure, ou encore dans la partie inférieure de ce lit. Comme expliqué ci-avant : au repos, les couches ou lits 4, 5 et 6 se collent l'une sur l'autre du fait de leur différence de densité; lorsque de l'air (ou gaz oxygéné) est introduit à la base par 3, le mélange d'air et d'eau fluidise les particules du lit 4 par le mouvement des bulles, ce qui permet un échange intensif entre le gaz, l'eau à traiter et le biofilm qui s'accroche aux particules. Pendant cette opération, le lit 5 et la couche supérieure 6 restent en régime non turbulent (d'où l'expression de lit fixe utilisée dans la présente description).

A cause de l'accumulation de matières en suspensions et de la croissance biologique à l'intérieur du lit filtrant, le matériau se colmate progressivement. L'accroissement de la perte de charge peut être suivi par mesure manométrique ou par la montée du niveau du liquide dans la colonne 12 de mise en charge ou de mesure de perte de charge. La rétention de particules peut être améliorée par l'ajout d'un floculant.

Quand une valeur prédéfinie de perte de charge est atteinte le lavage du lit est déclenché. Pour cela, une vanne de chasse 13 est ouverte jusqu'à obtention de la vitesse de lavage voulue. L'écoulement rapide à contre-courant du liquide traité et stocké en partie supérieure 8 du réacteur permet l'expansion du matériau. Pour chaque granulométrie et densité du matériau, on pourra choisir la vitesse de lavage en fonction de l'expansion du matériau souhaité.

Le passage rapide à contre-courant permet d'entraîner les matières stockées dans les espaces intersticiels et de décrocher la biomasse en excès accumulée sur la surface du matériau, mais on peut choisir la vitesse de lavage pour garder un biofilm actif sur le matériau. Ceci permet, après vidange de la réserve 8 et fermeture de la vanne 13 de redémarrer l'alimentation à une charge semblable à celle avant lavage.

L'injection de l'alimentation d'effluent 11 au-dessus du compartiment de décantation 2 permet d'épaissir les boues alors que l'épuration se poursuit dans le lit granulaire. Les boues elles-mêmes sont récupérées dans le compartiment 15 et évacuées par la pompe 16. Un recyclage de l'effluent épuré par une pompe 14 permet éventuellement d'améliorer la répartition ou d'apporter des nitrates en zone de préfiltration.

Pour allonger les durées entre les lavages, de très courtes chasses d'eau par ouverture de la vanne 13 peuvent être effectuées périodiquement pour détasser le matériau et permettre une pénétration plus profonde des impuretés dans le lit filtrant. Ces mini-lavages décolmateront davantage la partie inférieure du filtre plus chargée en matières en suspension. Les chasses rapides peuvent être déclenchées de manière à assurer une perte de charge équilibrée sur toute la hauteur du milieu de filtration. Ceci permet de s'affranchir d'organes de régulation pour l'équipartition du gaz oxygéné et de l'eau.

Afin d'éviter une trop forte compression du lit par une insufflation continue, on peut prévoir une pulsation de l'air ou gaz oxygéné. L'insufflation de l'air peut être maintenue pendant le lavage, pulsé ou non, pour favoriser le décolmatage du lit.

Selon une réalisation avantageuse du procédé, on peut combiner une batterie de filtres. Un plan d'eau commun alimentera des colonnes de mise en charge individuelles à chaque filtre. Les colonnes de mise en charge évitent la surpression créée par un éventuel colmatage accidentel, tout en compensant le colmatage en continu. Avec cette alimentation gravitaire, le débit peut être facilement mesuré et réglé par des déversoirs.

Les compartiments de stockage d'eau de lavage d'une batterie de filtres seront reliés hydrauliquement. Ainsi, l'eau épurée des filtres en fonctionnement alimentera le flux de lavage du filtre en décolmatage, ce qui permet de produire la hauteur et le volume des compartiments de stockage superposés au lit filtrant, les dimensions pouvant être calculées en fonction du débit et du nombre des filtres.

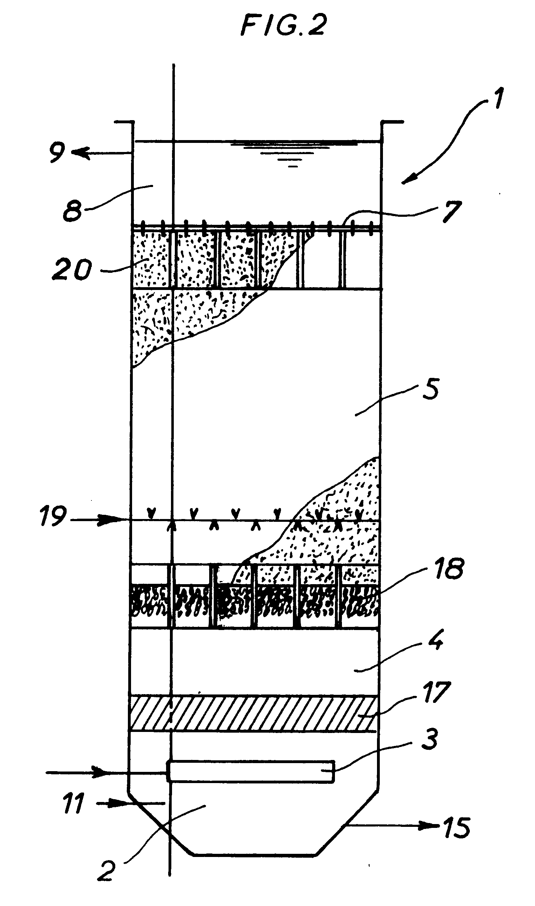

Une autre installation de traitement d'eau, conforme à l'invention mais comportant diverses variantes dans la réalisation et mise en oeuvre du réacteur unique, est illustrée sur la figure 2 des dessins annexés.

Conformément à une première variante, on peut substituer au diffuseur du gaz oxygéné (ou air) 3 une introduction d'eau dite "blanche" c'est-à-dire une eau saturée en bulles d'air, obtenue comme on le sait par diffusion, sous pression, d'air dans de l'eau. Cette eau peut être constituée, si désiré, par une partie de l'eau traitée qui sort en 9 par le haut du réacteur.

Selon une deuxième caractéristique, on a introduit dans la partie inférieure du réacteur 1, au niveau de la base du lit 4 qui sera fluidisé, un garnissage 17 constitué avantageusement par des matériaux textiles, par exemple filaments croisés de géotextiles ou produits équivalents. Ce garnissage, prévu pour laisser passer l'air et l'eau, sert de support pour les bactéries fixes et a pour fonction d'extraire déjà une partie de la pollution de l'eau à traiter lors de son arrivée (par 11) dans le réacteur 1.

Conformément à une autre variante, on a installé un cloisonnement équirépartiteur 18 au niveau de l'interface matériau-eau. Ce cloisonnement, de type grille ou caillebotis permet de répartir et de canaliser uniformément le fluide d'oxygénation, l'eau d'alimentation à traiter et le flux de lavage. En outre, il permet de briser la masse compacte ou piston formé par le matériau de filtration lors du lavage final par chasse d'eau.

Selon une autre caractéristique, on peut installer au niveau du lit fixe 5, une deuxième rampe d'injection 19 destinée à brasser la zone d'interface matériau-eau. L'injection peut consister soit en fluide oxygéné (ou eau blanche) soit en eau de balayage sous pression. On peut ainsi éviter les colmatages de surface et mieux les débloquer lorsqu'ils se produisent.

Enfin, selon une autre variante illustrée également sur la même figure 2, un autre cloisonnement 20 peut être prévu sous le plafond 7 du réacteur. Ce cloisonnement, de même type que celui 18 déjà décrit plus haut sert notamment à favoriser l'équirépartition de l'effluent traité et du fluide d'oxygénation.

Afin de mettre en exergue les avantages apportés par le procédé et l'installation selon l'invention, on décrira ci-après, à titre illustratif, des extraits de quelques exemples de réalisation.

Exemple N°1

On a effectué des traitements, selon le procédé de l'invention, de diverses eaux résiduaires dans une installation pilote du même type que celle de la figure N°1 des planches annexées, selon deux variantes de réacteurs dont les caractéristiques sont résumées ci-après :

| Paramètres des lits | Réacteur 1 | Réacteur 2 |
|---|---|---|
| Système de retenue (7) | Tamis métallique maille de $\phi$ 5mm | Plafond crépiné Fentes de 2 mm |
| Couche-support (6) | Polystyrène expansé | Polystyrène expansé |
| Densité | 0,01 | 0,02 |
| Granulométrie (mm) | 6 à 10 | 3 à 5 |
| Hauteur (mètre) | 0,20 | 0,30 |
| Couche filtrante (5) | Polyéthylne expansé | Polyéthylène expansé |
| Densité | 0,03 | 0,03 |
| Granulométrie | 3 à 5 | 2 à 3 |
| Hauteur (mètre) | 1,5 | 2,5 |
| Couche lit fluidisé (4) | Polypropylène allégé | Shiste expansé |
| Densité | 0,8 | 0,6 |
| Granulométrie (mm) | 10 à 15 | 5 à 6 |
| Hauteur (mètre) | 1,5 | 0,5 |

Les autres caractéristiques principales et les principales performances obtenues son résumées dans le tableau ci-après :

| Débits eau à traiter (1/h) | 120 | 120 |
|---|---|---|
| Air | 250 | 1 500 |
| Surface de filtre (m2) | 0,03 | 0,5 |
| Température de traitement (°C) | 15 | 15 |
| Charges volumiques appliquées (Kg/m3-jour | | |
| DCO | 15 | 5 |
| DBO | 7,5 | 2,5 |
| NTK | | |
| Effluent d'entrée (mg/1) | | |
| DCO | 500 | 500 |
| DBO | 250 | 250 |
| MES | 200 | 200 |
| NTK | 50 | 50 |
| Effluent de sortie (mg/1) | | |
| DCO | 70 | 50 |
| DBO | 20 | 10 |
| MES | 20 | 10 |
| NTK | 30 | 5 |

Nota : La charge volumique appliquée correspond à la quantité de DCO, DBO et NTK traitée par m3 de filtre pendant 24 heures.

| Rendement(%) | Réacteur 1 | Réacteur 2 |
|---|---|---|
| DCO | 86 | 90 |
| DBO | 92 | 96 |
| NTK | 40 | 90 |

MES = matières en suspension

NTK = azote organique kjeldahl

## Exemple N°2

Les essais concernent le traitement d'une eau de surface à potabiliser, notamment en vue de la nitrification biologique, ceci dans un réacteur du même type que celui de la fig.1 annexée.

Le matériau du lit fluidisé était constitué par du shiste expansé de densité 0,5, granulométrie environ 2 mm sur une hauteur de 0,50 m. La couche filtrante ou lit fixe était du polystyrène expansé de densité 0,03 granulométrie 1 mm, sur une hauteur de 0,5 m. Il n'y avait pas ici de couche-support au-dessus du lit fixe.

On a opéré à température d'environ 10°C avec une vitesse de filtration de 10 m/h, une vitesse d'aération par de l'air de 5m/h.

On a constaté que le taux de NH4 passait en moyenne, depuis l'entrée (effluent à traiter) jusqu'à la sortie (eau dénitrifiée), de 3,5 à 0,1 mg/l.

Bien entendu, dans le cadre de l'invention, une ou plusieurs des variantes de réalisation illustrées sur la figure 2 peuvent être mises en oeuvre. Par ailleurs, l'alimentation en effluent et/ou gaz oxygéné peut être intermittente.

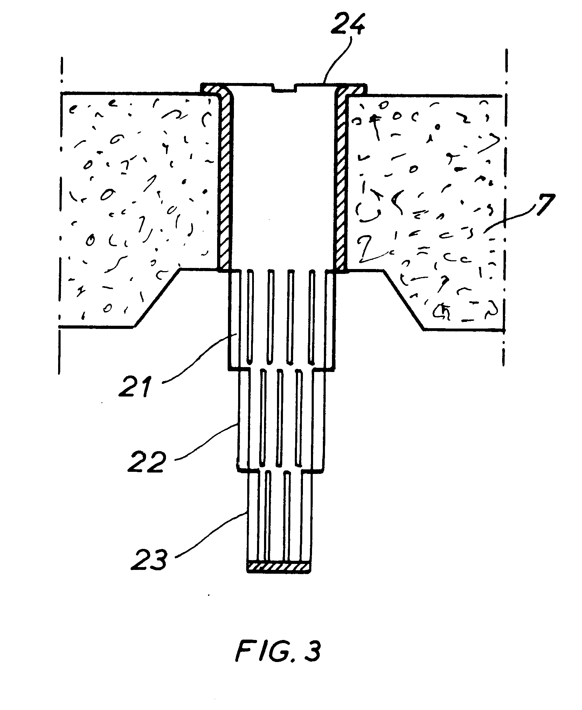

Conformément à une disposition avantageuse, illustrée sur la figure 3 des dessins , le dispositif de retenue ou plafond (7) peut être muni de crépines permettant de créer, pendant le lavage, une perte de charge suffisamment faible pour éviter d'augmenter la hauteur d'eau nécessaire au-dessus du plafond (7). Selon une réalisation particulièrement intéressante, ces crépines sont conçues pour être vissées directement, selon des diamètres décroissants (21,22,23) avec, éventuellement, grille de protection supérieure à 24, par le haut du réacteur au niveau du plafond (7). Ceci permet d'éviter toute manipulation des lits.

## Revendications

1.  Procédé pour la purification, par voie biologique, d'eaux résiduaires par envoi, à co-courants ascendants de l'eau à traiter et de gaz oxygéné dans un seul réacteur ou filtre biologique muni comme moyen de filtration d'une zone inférieure de lit fluidisé et d'une zone supérieure au lit fixe, caractérisé en ce que les particules desdits lits sont constituées par des matériaux expansés de densité inférieure à celle de l'eau, celles du lit fixe étant à la fois plus petites et plus légères que celles du lit fluidisé.

2.  Procédé selon la revendication 1, caractérisé en ce que l'arrangement des particules et des lits satisfait à la relation :

$$\frac{D1}{D2} = \frac{S2 - SL}{S1 - SL} \ (1)$$

D1, SL correspondant respectivement au diamètre moyen des particules et à la masse volumique du lit inférieur fluidisé ;

D2, S2 : mêmes définitions que ci-dessus mais pour le lit supérieur fixe, SL étant la masse volumique du liquide.

3.  Procédé selon la revendication 1, caractérisé en ce que D1 est compris entre 3 et 15 mm, S1 entre 300 et 800 g/l, alors que D2 est compris entre 1 et 10 mm, S2 entre 20 et 100 g/l.

4.  Procédé selon l'une quelconque des revendications 1 ou 2, caractérisé en ce que les hauteurs respectives des lits peuvent varier de 0,20 à 2 mètres pour le lit inférieur et de 0,50 à 3 mètres pour le lit supérieur.

5.  Procédé selon l'une quelconque des revendications 1 à 4, caractérisé en ce que la densité des lits ou couches de particules légères est de plus en plus faible dans le sens ascendant, passant de 0,5 - 0,8 à 0,005 - 0,08.

6.  Réacteur ou filtre biologique pour la mise en oeuvre du procédé selon l'une quelconque des revendications 1 à 5, caractérisé en ce qu'il comporte du bas en haut : une zone d'épaississement et d'évacuation des boues d'épuration (2) ; un dispositif d'injection du gaz oxygéné (3) ; une zone de matériaux filtrants constitués par une première couche de particules moins denses que l'eau ou lit fluidisé (4), une seconde couche de particules plus petites et plus légères que les précédentes ou lit fixe (5) et au-dessus une couche-support (6) de particules encore plus légères, laquelle est surmontée d'un dispositif de retenue (7) ; et, dans le haut du réacteur, une zone (8) de réserve d'eau de lavage au sommet de laquelle est prévue l'évacuation (9, 10) de l'effluent traité ; l'eau traitée pouvant être recyclée par une pompe (14) alors que l'effluent à épurer (11) est introduit à la base du réacteur (1) ; une colonne (12) de mise en charge ou de mesure de perte de charge étant en outre prévue sur la hauteur du réacteur avec liaison avec la base de ce dernier ; les boues étant récupérées dans un réceptacle (15) et évacuées par pompe (16).

7.  Réacteur selon la revendication 6, caractérisé en ce qu'il est muni en outre d'une vanne de chasse d'eau (13) dont l'ouverture déclenche le lavage des lits à contre-courant descendant, lequel entraîne une expansion du lit granulaire.

8.  Réacteur selon la revendication 7, caractérisé en ce qu'il est muni de moyens pour assurer une alimentation, en effluent et/ou en gaz oxygéné, intermittente et entrecoupée par des chasses rapides d'eau.

9.  Réacteur selon l'une quelconque des revendications 6 à 8, caractérisé en ce qu'il comporte en outre un système de cloisonnement équirépartiteur, de type grille, d'une part au niveau de l'interface matériau-eau (18) et, d'autre part, en (20), sous le plafond (7) du réacteur.

10. Réacteur selon la revendication 8, caractérisé en ce qu'il comprend, au niveau de la base du lit fluidisé (4) un garnissage (17) en matériau textile servant de support pour les bactéries.

11. Réacteur selon l'une quelconque des revendications 9 et 10, caractérisé en ce qu'il comporte, au niveau du lit fixe (5) une deuxième rampe (19) pour l'injection de gaz oxygéné et/ou d'eau de balayage sous pression.

12. Réacteur selon l'une quelconque des revendications 6 à 11, caractérisé en ce que le dispositif de retenue (7) est muni de crépines vissables (21, 22, 23) par le haut du réacteur.

13. Installation d'épuration d'eau, caractérisée en ce qu'elle comporte plusieurs réacteurs (1), selon l'une quelconque des revendications 6 à 12, disposés en parallèle à proximité d'un plan d'eau commun et dont les compartiments de lavage sont reliés hydrauliquement pour fournir l'eau de lavage par les filtres en fonctionnement.

**Patentansprüche**

1. Verfahren Zur biologischen Reinigung von Abwasser durch gleichgerichtetes Befördern des zu behandelnden Wassers und eines Sauerstoff enthaltenden Gases durch einen Reaktor oder biologischen Filter, der als Filtriereinrichtung mit einer unteren, ein Schwebebett aufweisenden Zone und einer oberen, ein Festbett aufweisenden Zone versehen ist, dadurch gekennzeichnet, daß die Teilchen der Betten durch expandierte Stoffe gebildet sind, deren Dichte geringer ist als die des Wassers, wobei die Stoffe des Festbetts gleichzeitig kleiner und leichter als die des Schwebebetts sind.

2. Verfahren nach Anspruch 1, dadurch gekennzeichnet, daß die Anordnung der Teilchen und der Betten der folgende Gleichung entspricht:

$$\frac{D1}{D2} - \frac{S2-SL}{S1-SL} \ (1)$$

worin D1 und SL jeweils den Durchschnittsdurchmesser der Teilchen bzw. die volumetrische Masse des unteren Schwebebetts bedeuten; und D2 und S2 dieselben Definitionen wie in bezug auf das obere Festbett haben und sich auf das untere Schwebebett beziehen, wobei SL die volumetrische Masse der Flüssigkeit bedeutet.

3. Verfahren nach Anspruch 1, dadurch gekennzeichnet, daß D1 zwischen 3 und 15 mm, S1 zwischen 300 und 800 g/l, D2 zwischen 1 und 10 mm und S2 zwischen 20 und 100 g/l liegt.

4. Verfahren nach Anspruch 1 oder Anspruch 2, dadurch gekennzeichnet, daß die jeweiligen Höhen der Betten zwischen 0,20 und 2 Meter bei dem unteren Bett und 0,50 und 3 Meter bei dem oberen Bett betragen.

5. Verfahren nach einem der Ansprüche 1 bis 4, dadurch gekennzeichnet, daß die Dichte der Betten oder Schichten der leichten Teilchen mit der Höhe von 0,5 - 0,8 auf 0,005 - 0.08 kleiner wird.

6. Biologischer Reaktor oder Filter zur Durchführung des Verfahrens nach einem der Ansprüche 1 bis 5, dadurch gekennzeichnet, daß in der Reihenfolge von unten nach oben er einen Bereich des verdickens und der Entleerung der Reinigungsschlämme (2), eine Einrichtung zum Einspritzen von Sauerstoff enthaltendem Gas (3), einen Bereich mit filtrierenden Stoffen, der aus einer ersten Schicht, deren Teilchen weniger dicht sind als das Wasser oder das Schwebebett (4), einer zweiten Schicht, deren Teilchen kleiner und leichter sind als die vorherigen oder das Festbett (5) und einer obenliegenden Stützschicht (6) besteht, deren Teilchen noch leichter sind und die unter einer Halteeinrichtung (7) angeordnet ist, und im oberen Teil des Reaktors einen Waschbereich, der oben einen Austrag für das behandelte Abwasser (9 und 10) aufweist, wobei das behandelte Wasser durch eine Pumpe (14) umgewälzt werden kann, während das zu behandelnde Abwasser (11) unten in den Reaktor (1) eingeführt wird, wobei einer Ladesäule (12) oder eine Säule zur Messung des Verlustes an Ladung über Höhe des Reaktors vergesehen ist, mit dem sie verbunden ist, wobei die Schlämme in einem Gefäß (15) gesammelt und mittels einer Pumpe (16) entfernt werden.

7. Reaktor nach Anspruch 6, dadurch gekennzeichnet, daß er mit einem Wasserspülventil (13) versehen ist, dessen Öffnen das Waschen der Schichten nach unten und in Gegenstrom veranlaßt, so daß das Körnerbett zum Ausdehnen gebracht wird.

8. Reaktor nach Anspruch 7, dadurch gekennzeichnet, daß er mit Einrichtungen für die intermittierende Zufuhr von Abwasser und/oder Sauerstoff enthaltendem Gas versehen ist, die durch kurze Wasserspülungen unterbrochen wird.

9. Reaktor nach einem der Ansprüche 6 bis 8, dadurch gekennzeichnet, daß er weiterhin ein gitterartiges System mit eine gleichmässige Teilung bewirkenden Trennwänden umfaßt, das einerseits auf der Höhe der Grenzschicht zwischen Material und Wasser (19) und andererseits (bei 20) unterhalb der Decke (7) des Reaktors angeordnet ist.

10. Reaktor nach Anspruch 8, dadurch gekennzeichnet, daß auf der Höhe des unteren Endes des Schwebebettes (4) er eine Auskleidung (17) aus Textilstoff umfaßt, die als Träger für Bakterien dient.

11. Reaktor nach Anspruch 9 oder Anspruch 10, dadurch gekennzeichnet, daß auf der Höhe des Festbettes (5) er eine zweite Einspritzerampe (19) für Sauerstoff enthaltendes Gas und/oder unter Druck stehendes Spülwasser umfaßt.

12. Reaktor nach einem der Ansprüche 6 bis 11, dadurch gekennzeichnet, daß die Halteeinrichtung (7) mit über die Höhe des Reaktors verteilten Schraubfiltern (21, 22 und 23) versehen ist.

13. Anlage zur Reinigung von Wasser, dadurch gekennzeichnet, daß sie mehrere Reaktoren (1) nach einem der Ansprüche 6 bis 12 umfaßt, die parallel zueinander und in der Nähe eines gemeinsamen Wasserspiegels angeordnet sind, dessen Waschabteilungen hydraulisch miteinander verbunden sind, um Waschwasser durch die funktionierenden Filter zur Verfügung zu stellen.


## Claims

1. Process for the biological purification of waste water by sending, with ascending co-currents, the water to be treated and oxygenated gas in a single reactor or biological filter containing as filtering means a lower fluidised bed zone and an upper fixed bed zone, characterised in that the particles of said beds consist of expanded materials having a density lower than the density of water, the particles of the fixed bed being both smaller and lighter than the particles of the fluidised bed.

2. Process according to claim 1, wherein the arrangement of the particles and beds satisfies the following equation :

$$\frac{D_1}{D_2} = \frac{S_2 - S_L}{S_1 - S_L}$$

$D_1$, $S_L$ corresponding respectively to the average diameter of the particles and to the volume mass of the lower fluidised bed ; $D_2$, $S_2$ have the same definitions as above but for the upper fixed bed ; $S_L$ being the volume mass of the liquid.

3. Process according to claim 2, characterised in tht $D_1$ is comprised between 3 and 15 mm, $S_1$ is between 300 and 800 g/l, $D_2$ is comprised between 1 and 10 mm and $S_2$ is between 20 and 100 g/l.

4. Process according to any one of claims 1 or 2, characterised in that the respective heights of the beds can vary from 0.20 to 2 metres for the lower bed and from 0.50 to 3 metres for the upper bed.

5. Process according to any one of claims 1 to 4, characterised in that the density of the beds or layers of light particles is smaller and smaller in the ascending direction, proceeding from 0.5 - 0.8 to 0.005 - 0.08.

6. Reactor or biological filter for carrying out the process according to any one of claims 1 to 5, characterised in that it comprises from bottom to top : a sludge thickening and removal area (2) ; a device for injecting the oxygenated gas (3) ; a filtering material area comprising a first layer of particles less dense than water or fluidised bed (4) ; a second layer of particles smaller and lighter than the preceding particles or fixed bed (5) and, above, a support layer (6) of even lighter particles, which is covered by a retention device (7) ; and, at the top of the reactor, a wash water reserve area (8) having at the top thereof an outlet (9,10) for treated water ; the treated water being able to be recycled by pump means (14) when the water to be purified (11) is introduced at the base of the reactor (1) ; a column (12) for putting in charge or measuring the loss of charge being further provided along the height of the reactor and connected to the base of same ; the sludges being recovered in a receptacle (15) and evacuated by pump means (16).

7. Reactor according to claim 6, characterised in that it further includes a water flush valve (13) the opening of which allows the wash of the beds with a descending countercurrent, said wash causing an expansion of the granular bed.

8. Reactor according to claim 7, characterised in that it comprises means for ensuring a flow of waste water and/or oxygenated gas intermittently and for interspersing rapid flushes of water.

9. Reactor according to any one of claims 6 to 8, characterised in that it further includes a grid-type system for the equal partition into compartments disposed on the one hand at the interface material-water (18) and, on the other hand, at the position (20) under the top (7) of the reactor.

10. Reactor according to claim 8 characterised in tht it comprises, at the base of the fluidised bed (4) a packing (17) made of textile material used as support for bacteria.

11. Reactor according to any one of claims 9 or 10, characterised in that it comprises at the level of the fixed bed (5) a second means (19) for injecting oxygenated gas and/or flush water under pressure.

12. Reactor according to any one of claims 6 to 11, characterised in that the retention device (7) is provided with screwable strainers (21,22,23) which are attached to the top of the reactor.

13. Installation for the purification of water, characterised in that it comprises several reactors (1) according to any one of claims 6 to 12, arranged in parallel connection close to a common stretch of water and the wash compartments of which are hydraulically connected for supplying the wash water by the working filters.

FIG. 1

## FIG.2

FIG. 3